# EUROPÄISCHE PATENTSCHRIFT

(11) **EP 1 441 917 B1**
(45) Veröffentlichungstag und Bekanntmachung des Hinweises auf die Patenterteilung: **03.04.2013**
(21) Anmeldenummer: 02782756.7
(22) Anmeldetag: 04.11.2002
(51) Int. Cl.: B60G 7/00

(54) **KRAFTVERBINDUNGSSTREBE**
FORCE CONNECTION STRUT
JAMBE DE FORCE

(30) Priorität: 05.11.2001 DE 10153799
(43) Veröffentlichungstag der Anmeldung: 04.08.2004
(73) Patentinhaber: ZF Friedrichshafen AG, 80846 Friedrichshafen (DE)
(72) Erfinder: SCHÖNHOFF, Stefan, 49191 Belm (DE); KRUSE, Jochen, 49088 Osnabrück (DE); BUDDE, Frank, 49401 Damme (DE)
(86) Internationale Anmeldenummer: PCT/DE2002/004082
(87) Internationale Veröffentlichungsnummer: WO 2003/039892

(56) Entgegenhaltungen:
- EP-A- 0 849 491
- EP-A- 0 851 131
- FR-A- 2 765 503
- US-A- 6 030 570
- US-B1- 6 250 657

## Beschreibung

### Kraftverbindungsstrebe eines Fahrwerks eines Personen- oder Nutzkraftwagens

Die Erfindung betrifft eine Kraftverbindungsstrebe eines Fahrwerks eines Personen- oder Nutzkraftwagens zur Verbindung zwischen Chassis und Radträger, vorzugsweise eine Achsstrebe oder einen Fahrwerkslenker, mit einem länglichen Grundkörper und mindestens zwei endständigen Lageraufnahmen zur Ein- und Ausleitung von Kräften.

Solche Fahrwerksteile sind allgemein bekannt. Beispielhaft wird auf die Schriften DE 41 20 772 C2, DE 33 32 771 C2 und DE 199 31 079 A1 verwiesen.

Bei den oben genannten Schriften handelt es sich jeweils um kraftübertragende Fahrwerksteile, die im Wesentlichen aus einem länglichen Grundkörper und endständigen Lageraufnahmen mit Lagerungen bestehen. Die Lageraufnahmen und Lagerungen sind in diesen Fällen zwar aus Verbundwerkstoffen, das heißt einer Kombination aus Metallen und Kunststoffanteilen herstellt, jedoch besteht der längliche Grundkörper durchweg aus Metall.

Im Laufe der Entwicklung hat sich gezeigt, dass die genannten Fahrwerksteile, deren Grundkörper meist aus geschmiedetem Stahl oder Grauguß hergestellt ist, bezüglich seiner Materialkennwerte den gestiegenen Forderungen nicht gerecht wird, wobei auch bezüglich der Gewichseinsparung die Möglichkeiten bei reinen Metallgrundkörpern ausgereizt sind.

Teilweise wird zur Gewichtsoptimierung anstelle eines reinen Metallgrundkörpers auch ein reiner Kunststoffgrundkörper verwendet, jedoch bergen derartige Fahrwerksteile aus Kunststoff das Problem, dass diese Kunststoffe in der Regel, falls sie die ausreichenden Festigkeitseigenschaften aufweise, zu sprödem Brechen neigen. Das heißt, nach einer Schädigung eines solchen Fahrwerksteils ist die Funktion dieser Fahrwerksteile zu 100 % verloren, während beispielsweise bei aus Metall hergestellten Fahrwerksteilen zwar eine Verbiegung und Verformung entsteht, jedoch kein vollständiger Funktionsausfall stattfindet.

Es sind zwar aus der Literatur, beispielsweise aus der Offenlegungsschrift DE 38 39 855 A1, Verbundwerkstoffe auf der Basis von Blech-/Kunststoffkombinationen im Automobilbau bekannt. Allerdings handelt es sich bei den dort vorgeschlagenen Anwendungen um Strukturteile für Kraftfahrzeugtüren, Stoßfänger, Träger, Front- und Heckschalen beziehungsweise Türschweller, bei denen die die äußere Form bestimmenden Stahlblechteile durch Kunststoffverrippungen eine erhöhte Festigkeit beziehungsweise Steifigkeit aufweisen sollen. Keine dieser vorgeschlagenen Leichtbauteile sind jedoch dafür geeignet, massive Druck-/Zugkräfte wie sie bei Fahrwerksteilen auftreten aufzunehmen.

Weiterhin zeigt die US-A-6 030 570 eine gattungsgemäβe Kraftverbindunsstrebe eines Fahrwerks eines Kraftfahrzeuges zur Verbindung zwischen einem Chassis und einem Radträger mit einem länglichen Grundkörper und zwei an den Enden der Kraftverbindungstrebe vorgesehenen Lageraufnahmen zur ein- und Ausleitung von Kräften. Der Grundkörper weist einen Verbund einer flachen Metalleinlage und einer die Restkontur bildenden Kunststoffstruktur auf, welche durch zumindest teilweises Umspritzen der Metalleinlage gebildet ist. Die Metalleinlage bzw. die Metalleinlagen sind dabei im zentralen Mittenbereich der rechteckigen Querschnittskontur angeordnet. Diese Querschnittskontur ist hinsichtlich aufzunehmender Biegebelastung auf Grund eines niedrigen Widerstandsmoments nur ungenügend geeignet.

Es ist daher Aufgabe der Erfindung eine Kraftverbindungsstrebe eines Fahrwerks für einen Personen- oder Nutzkraftwagen derart weiter zu entwickeln, dass diese einerseits die Gewichtsvorteile von Kunststoffelementen aufweist, andererseits jedoch die Belastbarkeit wesentlich erhöht ist und auch bei einer Beschädigung nicht zu einem sofortigen Totalverlust seiner Funktionalität führt.

Diese Aufgabe wird durch die Merkmale des unabhängigen Patentanspruches gelöst. Vorteilhafte Weiterbildungen der Erfindung sind Gegenstand untergeordneter Ansprüche.

Für eine an sich bekannte Kraftverbindungsstrebe eines Fahrwerks eines Personen- oder Nutzkraftwagens zur Verbindung zwischen Chassis und Radträger, vorzugsweise eine Achsstrebe oder einen Fahrwerkslenker, mit einem länglichen Grundkörper und mindestens zwei endständigen Lageraufnahmen zur Ein- und Ausleitung von Kräften, wird vorgesehen, dass der Grundkörper einen Verbund zwischen einer flachen Metalleinlage und einer die Restkontur bildenden Kunststoffstruktur aufweist, welche durch Umspritzen der Metalleinlage gebildet wird. Unter Restkontur ist hierbei der Unterschied zwischen der endgültigen Kontur der Kraftverbindungsstrebe und dem Anteil, der durch die Metalleinlage gebildet wird, gemeint. Erfindungsgemäß weist die Kraftverbindungsstrebe im Bereich des Grundkörpers einen Querschnitt in H- oder U-Form mit drei Schenkeln auf wobei mindestens zwei Schenkel, vorzugsweise die peripher gelegenen Schenkel, durch je mindestens eine Metalleinlage verstärkt, vorzugsweise durch diese ausgebildet, sind

Diese Kombination ermöglicht es bei einer Kraftverbindungsstrebe nun einerseits die Vorteile einer Kunststoffstruktur zu nutzen und eine erhebliche Gewichtseinsparung bei gleichzeitig hoher Festigkeit zu erzeugen, während andererseits durch die Metalleinlage dafür gesorgt wird, dass selbst bei Beschädigungen kein sofortiger 100%-iger Funktionsverlust entsteht.

Ein weiterer Vorteil besteht darin, dass die Erzeugung von relativ komplexen Kunststoffsttukturen wesentlich einfacher zu gestalten ist als bei reinen Metallstrukturen. Beispielsweise kann hier eine sehr einfach strukturierte Metalleinlage mit Hilfe von Umspritzungen mit Kunststoff eine sehr komplexe Form mit großem Funktionsumfang erzeugt werden.

Vorteilhaft ist es hierbei, wenn die Metalleinlage so gestaltet ist, dass sie in ihrer Ausdehnung zumindest im Wesentlichen zur Druck-/Zugaufnahme dient, während die Kunststoffstrukturen überwiegend auf Torsion beansprucht werden.

Soll eine Verbesserung der Steifigkeit, insbesondere der Torsionssteifigkeit, bewirkt werden, so ist es vorteilhaft, wenn im Bereich des Grundkörpers Querstege, vorzugsweise aus Kunststoff, vorgesehen sind. Durch eine derartige Ausgestaltung besteht auch die Möglichkeit einzelne Schenkel durchbrochen auszuführen, so dass eine weitere Gewichtsersparung möglich ist.

Bezüglich des verwendeten Kunststoffes können neben dem homogenen Kunststoff auch Faserverstärkungen im Kunststoff vorgesehen sein, wobei vorzugsweise Glasfasern, Kohlefasern oder Aramidfasern, verwendet werden. Derartige Ausführungen mit Faserverstärkungen im Kunststoff können vorteilhaft so gewählt werden, dass die Faseranteile eine weitgehende Anpassung des Wärmeausdehnungsverhaltens der Kunststoffstrukturen zumindest im Bereich der Betriebstemperaturen an das Wärmeausdehnungsverhalten der mindestens einen Metalleinlage ermöglichen.

Durch diese besondere Ausgestaltung kann das Ausdehnungsverhalten der Kunststoffstrukturen an das Ausdehnungsverhalten der Metalleinlagen angepasst werden, so dass auch bei häufigen Temperaturwechsel keine Ermüdungserscheinungen, Rißbildungen oder Abrisse zwischen Metall und Kunststoff entstehen.

Da sich Kunststoffe, insbesondere bei der Verwendung von Spritzgußverfahren, besonders dazu eignen, komplexere äußere Formen zu verwirklichen, schlagen die Erfinder auch vor, dass die Kraftverbindungsstrebe bezüglich ihrer äußeren Form ausschließlich durch die Kunststoffstruktur bestimmt wird. Hierdurch ist es möglich, auf der anderen Seite bezüglich der Metalleinlagen auf einfache und leicht herzustellende Strukturen zurückzugreifen.

Des Weiteren können erfindungsgemäß die endständigen Lageraufnahmen aus Kunststoff erzeugt werden, wobei allerdings auch Lageraufnahmen möglich sind, welche eine Metalleinlage aufweisen. Vorzugsweise können die Metalleinlagen so ausgestaltet sein, dass die Lageraufnahme einschließlich der gegebenenfalls darin angeordneten Lager diese endständig durchdringen. Da in diesem endständigen Bereich besonders hohe Kräfte aufgenommen werden müssen und zusätzlich eine Materialreduktion durch die Lageraufnahme vorliegt, kann es besonders vorteilhaft sein, wenn die Metalleinlage zumindest einseitig endständig eine Verdickung aufweist, die zum Beispiel durch zusätzliche angebrachte Materiallagen, die möglichst untereinander eine feste Verbindung eingehen, erzeugt wird.

Als Metalleinlage eignen sich besonders Stahl, eine auf Eisen basierende Legierung oder, wenn auf besonders leichte Bauweise Wert gelegt wird, auch Aluminium oder eine Aluminiumlegierungen.

Ist die Metalleinlage besonderen Umweltbedingungen ausgesetzt, so kann es vorteilhaft sein, eine korrosionshemmende Oberflächenschutz anzubringen, wobei im Falle einer ungeschützt vorliegenden Außenseite, insbesondere diese Außenseite beschichtet sein sollte.

Zur Vermeidung von Rißbildungen im Kunststoff sollte außerdem die Metalleinlage entgratet sein.

Des Weiteren wird vorgeschlagen, dass zur Verbesserung der Stabilität die Metalleinlage Sicken aufweisen kann. Hierdurch wird einerseits die Stabilität der Metalleinlage selbst und andererseits die Verbindung zwischen Metall- und Kunststoffstruktur verbessert.

Zusätzlich können auch aus Gründen der Gewichtseinsparung und zur besseren Verbindungswirkung zwischen Metall und Kunststoff Aussparungen in den Metalleinlagen vorgesehen werden.

Besonders günstig ist es auch, wenn alle Metalleinlagen insgesamt vollständig von Kunststoff umgeben sind, da hierdurch einer Korrosionsbildung im Bereich des Metalls besonders wirksam entgegen gewirkt wird.

Besondere Ausgestaltungen der Metalleinlagen können beispielsweise darin bestehen, dass die endständigen Flächen zueinander einen Winkel bilden, vorzugsweise rechtwinklig zueinander angeordnet sind. Auf diese Weise kann besonders gut auf die unterschiedlich einwirkenden Kräfte an den jeweiligen Enden der Kraftverbindungsstrebe eingegangen werden.

Eine weitere besondere Ausführung der erfindungsgemäßen Kraftverbindungsstrebe sieht vor, dass mindestens eine Lageraufnahme eine Metallhülse aufweist. Durch diese Metallhülse wird die Elastizität einer solchen Lageraufnahme verbessert. Die Metallhülse kann beispielsweise auch über Aussparungen verfügen, so dass eine besonders feste Verbindung zwischen der Metall- und der Kunststoffstruktur erreicht wird.

Die Lageraufnahme der erfindungsgemäßen Kraftverbindungsstrebe hat vorteilhaft insgesamt eine Zylinderform, welche vorzugsweise mit mindestens einer endständigen Verdickung versehen ist. Zusätzlich kann die Lageraufnahme auch über eine radiale Einschnürung verfügen, so dass ein besserer Sitz, beispielsweise eines Molekularlagers, gewährleistet ist.

Als Lager können beispielsweise Molekularlager, Kugellager oder auch Festlager verwendet werden, wobei sich deren Ausführungsform nach den jeweils beabsichtigten Verwendungszwecken richtet.

Im Folgenden wird die Erfindung anhand der bevorzugten Ausführungsbeispiele mit Hilfe der Figuren näher beschrieben. Es zeigen im Einzelnen:
- Figur 1a:: Draufsicht auf Achsstrebe mit einer Metalleinlage;
- Figur 1b:: Querschnitt durch Achsstrebe aus Figur 1a;
- Figur 1c:: Seitenansicht der Achsstrebe aus Figur 1a;
- Figur 2a:: Draufsicht auf gebogene Achsstrebe mit einer Metalleinlage;
- Figur 2b:: Querschnitt durch Achsstrebe aus Figur 2a;
- Figur 2c:: Seitenansicht der Achsstrebe aus Figur 2a;
- Figur 3a:: Draufsicht auf gerade Achsstrebe mit verwundener Metalleinlage;
- Figur 3b.i:: Schnitt A-A durch Achsstrebe aus Figur 3a;

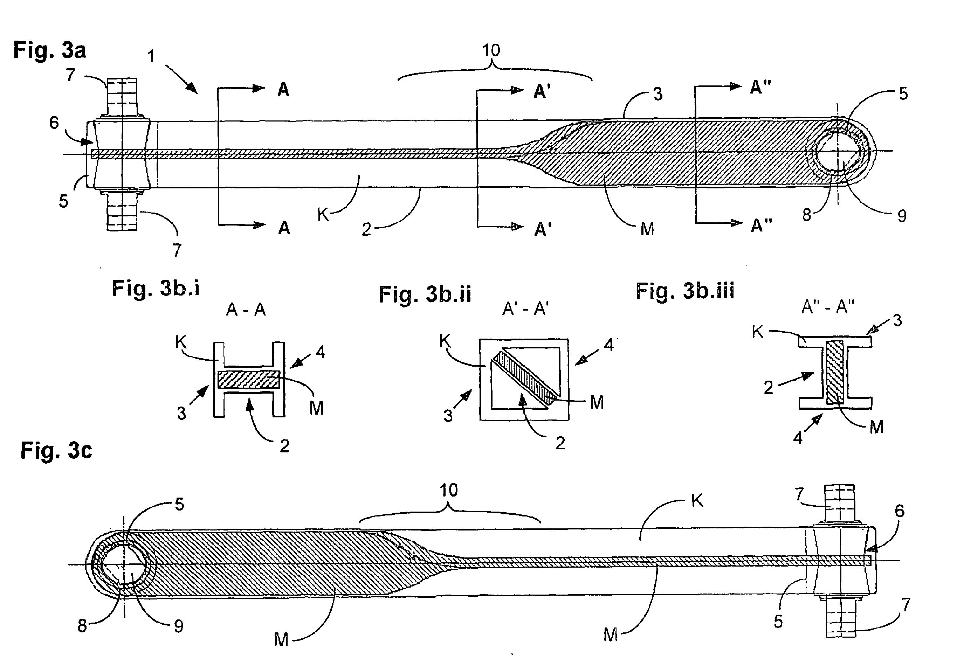

- Figur 3b.ii:: Schnitt A'-A' aus Figur 3a;
- Figur 3b.iii:: Schnitt A"-A" aus Figur 3a;
- Figur 3c:: Seitenansicht der Achsstrebe aus Figur 3a;

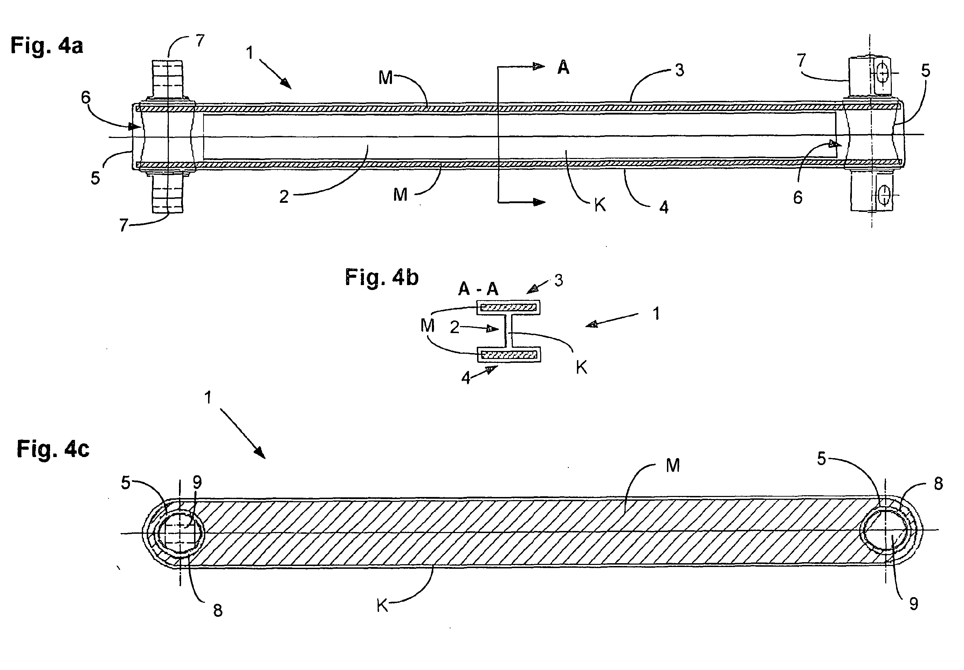

- Figur 4a:: Draufsicht auf Achsstrebe mit Metalleinlagen in den peripheren Schenkeln;
- Figur 4b:: Querschnitt durch Achsstrebe aus Figur 4a;
- Figur 4c:: Seitenansicht der Achsstrebe aus Figur 4a;

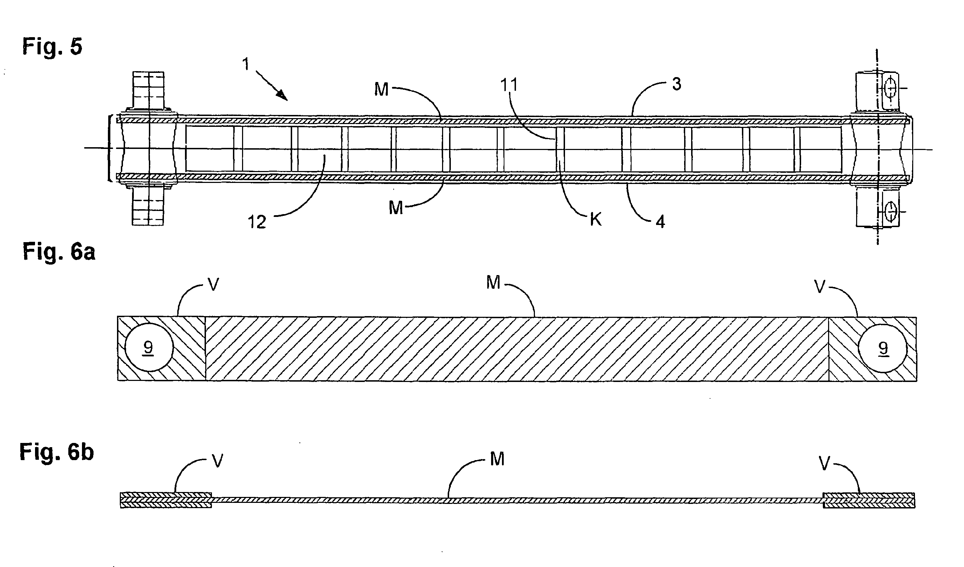

- Figur 5:: Drausicht auf Achsstrebe mit Metalleinlagen in den peripheren Schenkeln und geripptem und unterbrochenem zentralen Schenkel;
- Figur 6a:: Metalleinlage mit endständiger Verstärkung in Draufsicht;
- Figur 6b:: Metalleinlage mit endständiger Verstärkung in der Seitenansicht

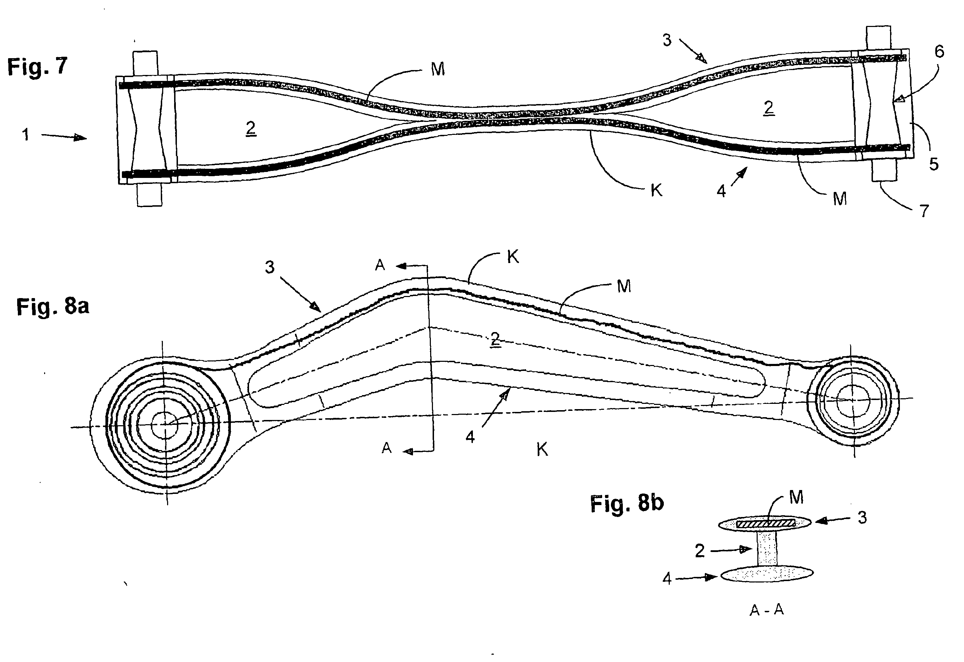

- Figur 7:: Längsschnitt durch eine Achsstrebe mit X-förmig angeordneten Längsstreben mit Metalleinlagen;
- Figur 8a:: Draufsicht auf eine gebogene Achsstrebe mit einer einseitigen Metalleinlage, welche Lageraufnahmen umschlingt.
- Figur 8b:: Schnitt A-A durch die Achsstrebe aus Figur 8a.

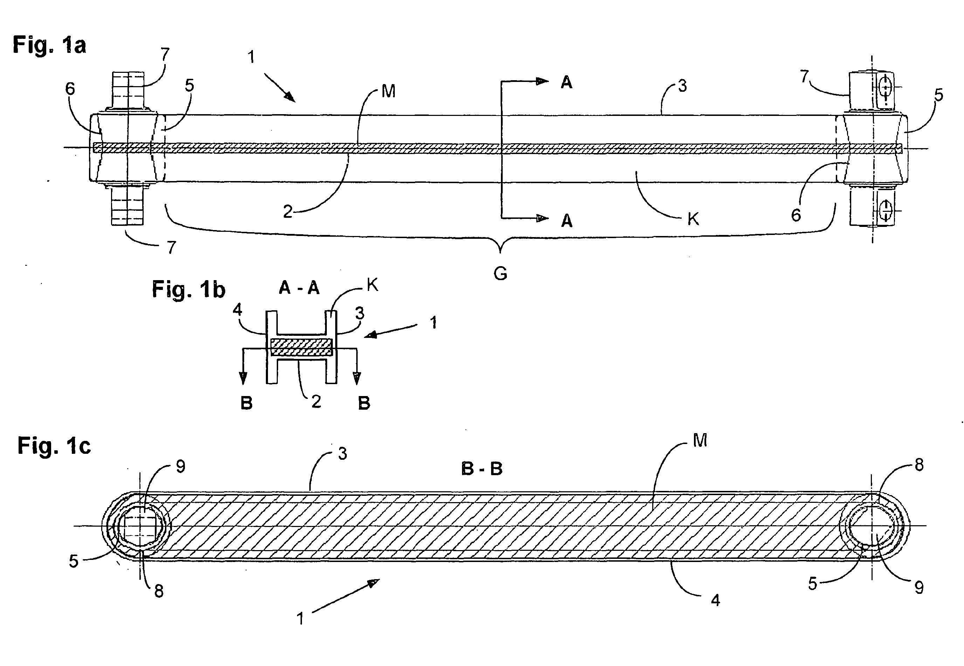

Die Figuren 1 bis 3 und 8 stellen im Folgenden keine erfindungsgemäßen Ausführungen dar, sondern lediglich weitere mögliche Varianten.

Die Figuren 1a bis 1c zeigen eine Achsstrebe eines LKW's in verschiedenen Ansichten. Die Achsstrebe 1 verfügt im Querschnitt über eine H-förmige Kontur mit einem zentralen Schenkel 2 und zwei damit verbundenen peripheren Schenkeln 3 und 4. Im zentralen Schenkel 2 befindet sich eine Metalleinlage M, die vollständig von Kunststoff umschlossen ist, der auch die Gesamtkontur der Achsstrebe prägt und damit auch die beiden peripheren Schenkel 3 und 4 des Grundkörpers G bildet. An den beiden Enden des Grundkörpers G befindet sich je eine Lageraufnahme 5, welche ebenfalls aus Kunststoff besteht, in der äußeren Form einem Zylinder entspricht und auf der Innenseite eine Einschnürung 6 aufweist. In die Lageraufnahme 5 ist ein elastisch dämpfendes Molekularlager mit einem Zapfen 7 eingesetzt.

Die Achsstrebe 1 ist dadurch herstellbar, dass die Metalleinlage aus Flachblech ausgestanzt wird, wobei auf eine sorgfältige Entgratung der Kanten zu achten ist, damit diese keine Verletzungen in der Kunststoffstruktur bei den später auftretenden Belastungen hervorrufen können. Dieses Blech wird anschließend im Spritzgußverfahren von allen Seiten mit Kunststoff, vorzugsweise mit einem Kunststoff mit Fasereinlage, umspritzt und bildet damit die endgültige Form der Achsstrebe 1.

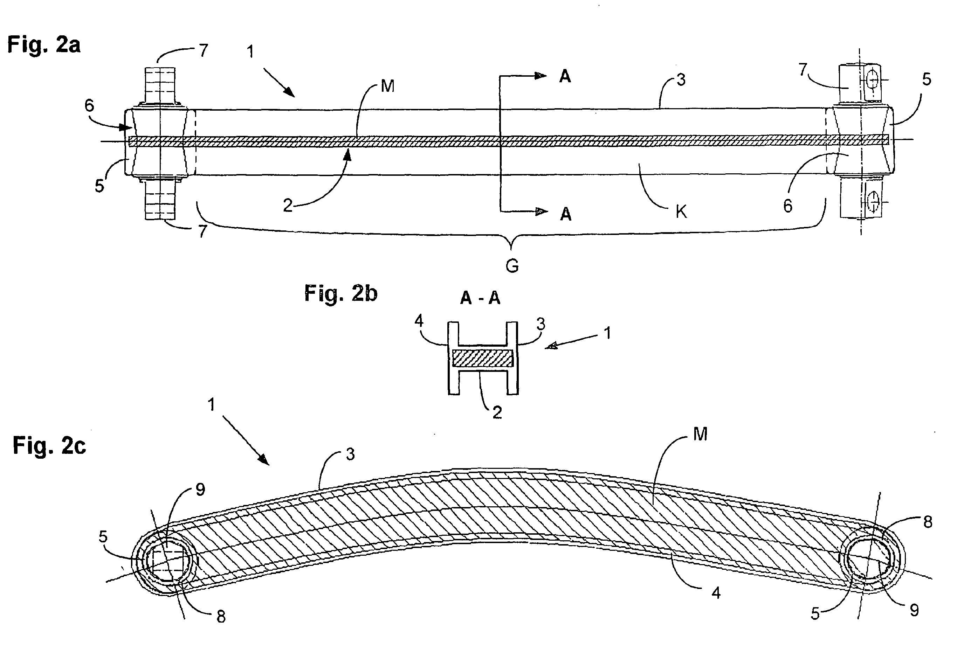

Die Figuren 2a bis 2c entsprechen grundsätzlich den Darstellungen der Figuren 1a bis 1c, wobei jedoch die hier dargestellte Achsstrebe eine Krümmung in der Ebene des zentralen Schenkels 2 aufweist. Auch diese Achsstrebe hat im Querschnitt H-Form und entspricht in ihrem Aufbau mit Ausnahme der Krümmung der Achsstrebe aus den Figuren 1a bis 1c.

Eine weitere Variante einer Achsstrebe mit einer einzigen Metalleinlage ist in den Figuren 3a und 3c dargestellt. Hierbei handelt es sich um eine Achsstrebe 1, welche im Grundkörper G in dem mit "10" bezeichneten Bereich eine Verwindung um 90° aufweist. Die endständigen Lageraufnahmen 5 mit den darin enthaltenen Molekularlagern 9 und den Zapfen 7 entsprechen den Ausführungen der zuvor gezeigten Achsstreben, jedoch sind sie um 90° gegeneinander versetzt.

Die Figuren 3b.i, 3b.ii und 3b.iii zeigen die Schnitte A-A, A'-A', A"-A" aus der Figur 3a. In diesen Figuren ist der kontinuierliche Übergang der Metalleinlage M mit seiner Verwindung beziehungsweise Drehung um 90° dargestellt, wobei entsprechend auch das Profil sich zunächst von einem H-Profil über ein KastenProfil zu einem H-Profil, jedoch mit 90°-Drehung zu dem ersten H-Profil, wandelt.

Eine Ausführungsvariante der erfindungsgemäßen Achsstrebe 1 ist in den Figuren 4a bis 4c in Draufsicht, Querschnitt und Seitenansicht gezeigt. In dieser Ausführungsform ist der Querschnitt, der in der Figur 4b dargestellt ist, ebenfalls H-förmig, jedoch ist dieses Mal die Metalleinlage in den beiden peripheren Schenkel 3 und 4 eingelegt, so dass durch ihr endständiges Umfassen der Lageraufnahme 5 eine wesentlich stabilere Einbindung der Lageraufnahmen in die gesamte Achsstrebe erzeugt wird, was eine wesentlich bessere Kraftübertragung ermöglicht.

In der Figur 5 ist eine Variante der Achsstrebe aus Figur 4a gezeigt, wobei der zentrale Schenkel 2, der aus Kunststoff hergestellt ist, hier mit Durchbrüchen 12 und dazwischen angeordneten Stegen 11 versehen ist. Auf diese Weise ergibt sich eine Gewichtsverminderung gegenüber der zuvor beschriebenen Ausführungsform.

Für besonders belastete Achsstreben besteht die Möglichkeit, an den beiden Enden eine zusätzliche Verdickung V in der Metalleinlage zu erzeugen. Dies ist beispielsweise in den Figuren 6a und 6b gezeigt. Die Figur 6a zeigt eine Draufsicht auf eine Metalleinlage M, die im Endbereich durch zusätzlich aufgebrachte Metalleinlagen verstärkt ist. Die Figur 6b zeigt eine Seitenansicht dieser Metalleinlage M mit den beidseitigen Verstärkungen V.

Anstelle der hier gezeigten Verstärkung durch Mehrfachlagen besteht auch die Möglichkeit die Metalleinlage aus sogenannten "Tailoredblanks" oder "Tailoredstrips" herzustellen. Hierbei können die Bereiche der Metalleinlage mit starker Belastung aus dickeren Blechteilen und Bereiche geringer Belastung aus dünneren Blechteilen bestehen, die zur Bildung der gesamten Metalleinlage zusammengeschweißt sind.

Eine weitere Ausgestaltungsmöglichkeit einer Kraftverbindungsstrebe 1, z.B. einer Achsstrebe eines Fahrwerks, ist in der Figur 7 im Längsschnitt dargestellt. Diese zeigt eine Ausführungsform, bei der ein endständiger H-Querschnitt zur Mitte hin mit den beiden peripheren Schenkeln 3 und 4 zusammenläuft, während sich der zentrale Schenkel 2 zur Mitte hin verjüngt und in der Mitte selbst verschwindet. Beide perihere Schenkel 3 und 4 enthalten eine Metalleinlage M, die bis zur und um die Lageraufnahme 5 verläuft.

Die Figur 8a zeigt schließlich eine schematische Darstellung einer gebogenen Kraftverbindungsstrebe in der Draufsicht, wobei als Metalleinlage M ein Metallband verwendet wird, das an einem Ende beginnend zunächst die linke Lageraufnahme umschließt, anschließend durch den ersten gebogenen peripheren Schenkel 3 verläuft und schließlich auf der rechten Seite die zweite Lageraufnahme umschlingt. Auch hier ist die äußere Kontur durch den, die Metalleinlage umspritzten Kunststoff gebildet, wobei die Metalleinlage dafür sorgt, dass auch im Falle eines spröden Bruches im Bereich der Kunststoffstruktur trotzdem ein Mindestmaß an Funktionalität erhalten bleibt. Die Metalleinlage stellt also ein zähes Gerüst innerhalb einer Kunststoffstruktur dar.

Dieser Aufbau ist nochmals in der Figur 8b im Schnitt A-A der Figur 8a zu erkennen. Hier ist deutlich zu sehen, wie im H-förmigen Querschnitt der erste der beiden peripheren Schenkel 3 und 4, die den zentralen Schenkel 2 umfassen, mit der Metalleinlage (M), die ein flexibles Band ist, verstärkt wird.

Es ist noch anzumerken, dass die Öffnungen in den Metalleinlagen - mit Ausnahme der Ausführung aus Figur 8a und 8b - zur Aufnahme der Hülse und Bildung der Lageraufnahme sowohl durch einfaches Ausstanzen eines Loches erzeugt werden können, als auch durch Tiefziehen und Bildung einer Einbuchtung, in die eine Hülse eingesetzt werden kann, oder direkte Ausbildung einer Form, die selbst einer Hülse entspricht.

Insgesamt wird durch die erfindungsgemäße Ausführung von Kraftverbindungsstreben erreicht, dass einerseits eine wesentlichere Gewichtseinsparung bewirkt wird, wobei gleichzeitig jedoch auch im Schadenfalle nicht sofort ein 100 %-iger Verlust der Funktionalität der Kraftverbindungsstrebe auftritt, da durch die vorhandene(n) Metalleinlage(n) eine zusätzliche Sicherheit gegen spröde Brüche verwirklicht wird.

### Bezugszeichenliste

- 1: Achsstrebe
- 2: Zentraler Schenkel
- 3: erster peripherer Schenkel
- 4: zweiter peripherer Schenkel
- 5: Lageraufnahme
- 6: Einschnürung
- 7: Zapfen
- 8: Öffnung in Metalleinlage
- 9: Molekularlager
- 10: Verwindungsbereich
- 11: Kunststoffstegen
- 12: Aussparung

- M: Metalleinlage
- K: Kunststoff
- V: Verstärkung
- G: Grundkörper

## Patentansprüche

1. Kraftverbindungsstrebe (1) eines Fahrwerks eines Personen- oder Nutzkraftwagens zur Verbindung zwischen einem Chassis und einem Radträger, vorzugsweise Achsstrebe oder Fahrwerkslenker, mit einem länglichen Grundkörper (G) und mindestens zwei endständigen Lageraufnahmen (5) zur Ein- und Ausleitung von Kräften, wobei der Grundkörper (G) einen Verbund mindestens einer flachen Metalleinlage (M) und einer die Restkontur bildenden Kunststoffstruktur (K) aufweist, welche durch zumindest teilweises Umspritzen der Metalleinlage (M) gebildet ist, **dadurch gekennzeichnet, dass** die Kraftverbindungsstrebe im Bereich des Grundkörpers (G) einen Querschnitt in H- oder U-Form mit drei Schenkeln (2, 3, 4) aufweist und dass mindestens zwei Schenkel, vorzugsweise die peripher gelegenen Schenkel (3, 4), durch je mindestens eine Metalleinlage (M) verstärkt,_____ vorzugsweise durch diese ausgebildet, sind.

2. Kraftverbindungsstrebe gemäß dem voranstehenden Patentanspruch 1, **dadurch gekennzeichnet, dass** die Metalleinlage (M) so gestaltet ist, dass diese in ihrer Ausdehnung, zumindest im Wesentlichen, zur Druck-/Zugaufnahme und die Kunststoffstrukturen (K) zur Torsionsaufnahme dienen.

3. Kraftverbindungsstrebe gemäß einem der voranstehenden Patentansprüche 1 oder 2, **dadurch gekennzeichnet, dass** im Bereich des Grundkörpers (G) Querstege (11), vorzugsweise aus Kunststoff, vorgesehen sind.

4. Kraftverbindungsstrebe gemäß einem der voranstehenden Patentansprüche 1 bis 3, **dadurch gekennzeichnet, dass** der verwendete Kunststoff zumindest teilweise Faserverstärkungen, vorzugsweise aus Glasfaser, Kohlefaser oder Aramidfaser, aufweist.

5. Kraftverbindungsstrebe gemäß dem voranstehenden Patentanspruch 4, **dadurch gekennzeichnet, dass** die Faseranteile derart gewählt werden, dass das Wärmeausdehnungsverhalten der Kunststoffstrukturen (K) im Bereich der Betriebstemperaturen zumindest weitgehend dem Wärmeausdehnungsverhalten der mindestens einen Metalleinlage (M) entspricht.

6. Kraftverbindungsstrebe gemäß einem der voranstehenden Patentansprüche 1 bis 5, **dadurch gekennzeichnet, dass** die äußere Form ausschließlich durch die Kunststoffstruktur (K) bestimmt wird.

7. Kraftverbindungsstrebe gemäß einem der voranstehenden Patentansprüche 1 bis 6, **dadurch gekennzeichnet, dass** mindestens eine, vorzugsweise beide, endständigen Lageraufnahmen (5) aus Kunststoff bestehen.

8. Kraftverbindungsstrebe gemäß dem voranstehenden Patentanspruch 7, **dadurch gekennzeichnet, dass** mindestens eine Lageraufnahme (5) einschließlich gegebenenfalls darin angeordnetem Lager mindestens eine Metalleinlage (M) durchdringt.

9. Kraftverbindungsstrebe gemäß einem der voranstehenden Patentansprüche 1 bis 8, **dadurch gekennzeichnet, dass** mindestens eine Metalleinlage (M) zumindest einseitig endständig eine Verdickung (V), vorzugsweise durch zusätzliche Materiallagen, aufweist.

10. Kraftverbindungsstrebe gemäß einem der voranstehenden Patentansprüche 1 bis 9, **dadurch gekennzeichnet, dass** mindestens eine Metalleinlage (M) aus Stahl oder einer Eisenbasislegierung besteht.

11. Kraftverbindungsstrebe gemäß einem der voranstehenden Patentansprüche 1 bis 10, **dadurch gekennzeichnet, dass** mindestens eine Metalleinlage (M) aus Aluminium oder einer Aluminiumlegierung besteht.

12. Kraftverbindungsstrebe gemäß einem der voranstehenden Patentansprüche 1 bis 11, **dadurch gekennzeichnet, dass** mindestens eine Metalleinlage (M) einen korrosionshemmenden Oberflächenschutz, zumindest auf einer ungeschützten Außenseite, aufweist.

13. Kraftverbindungsstrebe gemäß einem der voranstehenden Patentansprüche 1 bis 12, **dadurch gekennzeichnet, dass** die mindestens eine Metalleinlage (M) entgratet ist.

14. Kraftverbindungsstrebe gemäß einem der voranstehenden Patentansprüche 1 bis 13, **dadurch gekennzeichnet, dass** die mindestens eine Metalleinlage (M) Sicken aufweist.

15. Kraftverbindungsstrebe gemäß einem der voranstehenden Patentansprüche 1 bis 14, **dadurch gekennzeichnet, dass** die mindestens eine Metalleinlage (M) Aussparungen aufweist.

16. Kraftverbindungsstrebe gemäß einem der voranstehenden Patentansprüche 1 bis 15, **dadurch gekennzeichnet, dass** alle Metalleinlagen (M) vollständig von Kunststoff umgeben sind.

17. Kraftverbindungsstrebe gemäß einem der voranstehenden Patentansprüche 1 bis 16, **dadurch gekennzeichnet, dass** die endständigen Flächen der mindestens einen Metalleinlage (M) zueinander einen Winkel bilden, vorzugsweise rechtwinklig zueinander angeordnet sind.

18. Kraftverbindungsstrebe gemäß einem der voranstehenden Patentansprüche 1 bis 17, **dadurch gekennzeichnet, dass** mindestens eine Lageraufnahme (5) eine Metallhülse aufweist.

19. Kraftverbindungsstrebe gemäß dem voranstehenden Patentanspruch 18, **dadurch gekennzeichnet, dass** mindestens eine der Metallhülsen Aussparungen aufweist.

20. Kraftverbindungsstrebe gemäß einem der voranstehenden Patentansprüche 1 bis 19, **dadurch gekennzeichnet, dass** mindestens eine Lageraufnahme (5) eine Zylinderform, vorzugsweise mit mindestens einer endständigen Verdickung aufweist.

21. Kraftverbindungsstrebe gemäß einem der voranstehenden Patentansprüche 1 bis 20, **dadurch gekennzeichnet, dass** mindestens eine Lageraufnahme (5) eine innere radiale Einschnürung (6) aufweist.

22. Kraftverbindungsstrebe gemäß einem der voranstehenden Patentansprüche 1 bis 21, **dadurch gekennzeichnet, dass in mindestens einer** Lageraufnahme (5) ein Molekularlager (9) oder ein Kugellager oder ein Festlager vorgesehen ist.

23. Kraftverbindungsstrebe gemäß einem der voranstehenden Patentansprüche 1 bis 22, **dadurch gekennzeichnet, dass** die Metalleinlage aus Tailoredblanks oder Tailoredstrips, vorzugsweise hergestellt aus Blechen unterschiedlicher Dicke, besteht.

## Claims

1. Force connection strut (1) of an undercarriage of a passenger car or utility vehicle for connection between a chassis and a wheel carrier, preferably axle strut or undercarriage link, with an elongate basic body (G) and at least two end bearing receptacles (5) for the entry and exit of forces, the basic body (G) having a composite bond of at least one flat metal insert (M) and of a plastic structure (K) which forms the remaining contour and which is formed by at least partially injection-moulding around the metal insert (M), **characterized in that** the force connection strut has in the region of the basic body (G) an H-shaped or U-shaped cross section with three legs (2, 3, 4), and **in that** at least two legs, preferably the peripherally located legs (3, 4), are reinforced in each case by at least one metal insert (M), preferably are formed by this.

2. Force connection strut according to the preceding Patent Claim 1, **characterized in that** the metal insert (M) is configured such that it serves along its extent at least essentially for absorption of pressure/tension and the plastic structures (K) serve for the absorption of torsion.

3. Force connection strut according to either one of the preceding Patent Claims 1 and 2, **characterized in that** transverse webs (11), preferably made from plastic, are provided in the region of the basic body (G).

4. Force connection strut according to one of the preceding Patent Claims 1 to 3, **characterized in that** the plastic used has at least partially fibre reinforcements preferably consisting of glass fibre, carbon fibre or aramid fibre.

5. Force connection strut according to the preceding Patent Claim 4, **characterized in that** the fibre fractions are selected in such a way that the thermal expansion behaviour of the plastic structures (K) in the region of the operating temperatures corresponds at least largely to the thermal expansion behaviour of the at least one metal insert (M).

6. Force connection strut according to one of the preceding Patent Claims 1 to 5, **characterized in that** the external shape is determined solely by the plastic structure (K).

7. Force connection strut according to one of the preceding Patent Claims 1 to 6, **characterized in that** at least one, preferably both end bearing receptacles (5) consist of plastic.

8. Force connection strut according to the preceding Patent Claim 7, **characterized in that** at least one bearing receptacle (5), including, if appropriate, bearings arranged therein, penetrates through at least one metal insert (M).

9. Force connection strut according to one of the preceding Patent Claims 1 to 8, **characterized in that** at least one metal insert (M) has at the end, at least on one side, a thickening (V) preferably caused by additional material plies.

10. Force connection strut according to one of the preceding Patent Claims 1 to 9, **characterized in that** at least one metal insert (M) consists of steel or of an iron-based alloy.

11. Force connection strut according to one of the preceding Patent Claims 1 to 10, **characterized in that** at least one metal insert (M) consists of aluminium or of an aluminium alloy.

12. Force connection strut according to one of the preceding Patent Claims 1 to 11, **characterized in that** at least one metal insert (M) has corrosion-inhibiting surface protection, at least on an unprotected outer face.

13. Force connection strut according to one of the preceding Patent Claims 1 to 12, **characterized in that** the at least one metal insert (M) is deburred.

14. Force connection strut according to one of the preceding Patent Claims 1 to 13, **characterized in that** the at least one metal insert (M) has beads.

15. Force connection strut according to one of the preceding Patent Claims 1 to 14, **characterized in that** the at least one metal insert (M) has clearances.

16. Force connection strut according to one of the preceding Patent Claims 1 to 15, **characterized in that** all the metal inserts (M) are surrounded completely by plastic.

17. Force connection strut according to one of the preceding Patent Claims 1 to 16, **characterized in that** the end faces of the at least one metal insert (M) form an angle with one another, preferably are arranged at right angles to one another.

18. Force connection strut according to one of the preceding Patent Claims 1 to 17, **characterized in that** at least one bearing receptacle (5) has a metal sleeve.

19. Force connection strut according to the preceding Patent Claim 18, **characterized in that** at least one of the metal sleeves has clearances.

20. Force connection strut according to one of the preceding Patent Claims 1 to 19, **characterized in that** at least one bearing receptacle (5) has a cylindrical shape, preferably with at least one end thickening.

21. Force connection strut according to one of the preceding Patent Claims 1 to 20, **characterized in that** at least one bearing receptacle (5) has an inner radial contraction (6).

22. Force connection strut according to one of the preceding Patent Claims 1 to 21, **characterized in that** a molecular bearing (9) or a ball bearing or a fixed bearing is provided in at least one bearing receptacle (5).

23. Force connection strut according to one of the preceding Patent Claims 1 to 22, **characterized in that** the metal insert consists of tailored blanks or tailored strips, preferably produced from metal sheets of different thickness.

## Revendications

1. Jambe de force (1) d'un train de roulement d'une voiture particulière ou d'un véhicule utilitaire pour la liaison entre un châssis et un support de roue, de préférence un bras de liaison d'essieu ou un bras de train de roulement, comprenant un corps de base allongé (G) et au moins deux logements de palier d'extrémité (5) pour l'application et l'évacuation de forces, le corps de base (G) comprenant un composite constitué d'au moins un insert métallique plat (M) et d'une structure en plastique (K) formant le reste du contour, laquelle structure en plastique est formée par surmoulage au moins partiel de l'insert métallique (M), **caractérisée en ce que** la jambe de force présente, dans la région du corps de base (G), une section transversale en forme de H ou de U comprenant trois branches (2, 3, 4) et **en ce qu'**au moins deux branches, de préférence les branches (3, 4) situées en périphérie, sont renforcées par au moins un insert métallique (M) respectif, de préférence sont formées par celui-ci.

2. Jambe de force selon la revendication 1 précédente, **caractérisée en ce que** l'insert métallique (M) est configuré de telle sorte qu'il serve, sur son étendue, au moins essentiellement à l'absorption de pression/traction et que les structures en plastique (K) servent à l'absorption de torsion.

3. Jambe de force selon la revendication précédente 1 ou 2, **caractérisée en ce que** des nervures transversales (11), de préférence en plastique, sont prévues dans la région du corps de base (G).

4. Jambe de force selon l'une quelconque des revendications précédentes 1 à 3, **caractérisée en ce que** le plastique utilisé comprend au moins partiellement des renforcements par fibres, de préférence en fibres de verre, fibres de carbone ou fibres d'aramide.

5. Jambe de force selon la revendication 4 précédente, **caractérisée en ce que** la proportion de fibres est sélectionnée de telle sorte que le comportement de dilatation thermique des structures en plastique (K) dans la plage des températures de fonctionnement corresponde au moins dans une large mesure au comportement de dilatation thermique de l'au moins un insert métallique (M).

6. Jambe de force selon l'une quelconque des revendications précédentes 1 à 5, **caractérisée en ce que** la forme extérieure est déterminée exclusivement par la structure en plastique (K).

7. Jambe de force selon l'une quelconque des revendications précédentes 1 à 6, **caractérisée en ce qu'**au moins un logement de palier d'extrémité (5), de préférence les deux, est/sont constitué(s) de plastique.

8. Jambe de force selon la revendication 7 précédente, **caractérisée en ce qu**'au moins un logement de palier (5), y compris un palier éventuellement disposé dans celui-ci, traverse au moins un insert métallique (M).

9. Jambe de force selon l'une quelconque des revendications précédentes 1 à 8, **caractérisée en ce qu**'au moins un insert métallique (M) comprend au moins d'un côté à l'extrémité un épaississement (V), de préférence par des couches de matériau supplémentaires.

10. Jambe de force selon l'une quelconque des revendications précédentes 1 à 9, **caractérisée en ce qu**'au moins un insert métallique (M) est constitué d'acier ou d'un alliage à base de fer.

11. Jambe de force selon l'une quelconque des revendications précédentes 1 à 10, **caractérisée en ce qu**'au moins un insert métallique (M) est constitué d'aluminium ou d'un alliage d'aluminium.

12. Jambe de force selon l'une quelconque des revendications précédentes 1 à 11, **caractérisée en ce qu**'au moins un insert métallique (M) comprend une protection anticorrosion de la surface, au moins sur une face externe non protégée.

13. Jambe de force selon l'une quelconque des revendications précédentes 1 à 12, **caractérisée en ce que** l'au moins un insert métallique (M) est ébavuré.

14. Jambe de force selon l'une quelconque des revendications précédentes 1 à 13, **caractérisée en ce que** l'au moins un insert métallique (M) comprend des moulures.

15. Jambe de force selon l'une quelconque des revendications précédentes 1 à 14, **caractérisée en ce que** l'au moins un insert métallique (M) comprend des évidements.

16. Jambe de force selon l'une quelconque des revendications précédentes 1 à 15, **caractérisée en ce que** tous les inserts métalliques (M) sont complètement entourés de plastique.

17. Jambe de force selon l'une quelconque des revendications précédentes 1 à 16, **caractérisée en ce que** les surfaces d'extrémité de l'au moins un insert métallique (M) forment un angle l'une par rapport à l'autre, de préférence sont disposées perpendiculairement l'une par rapport à l'autre.

18. Jambe de force selon l'une quelconque des revendications précédentes 1 à 17, **caractérisée en ce qu**'au moins un logement de palier (5) comprend une douille métallique.

19. Jambe de force selon la revendication 18 précédente, **caractérisée en ce qu**'au moins l'une des douilles métalliques comprend des évidements.

20. Jambe de force selon l'une quelconque des revendications précédentes 1 à 19, **caractérisée en ce qu'**au moins un logement de palier (5) présente une forme cylindrique, de préférence avec au moins un épaississement d'extrémité.

21. Jambe de force selon l'une quelconque des revendications précédentes 1 à 20, **caractérisée en ce qu'**au moins un logement de palier (5) présente un étranglement radial interne (6).

22. Jambe de force selon l'une quelconque des revendications précédentes 1 à 21, **caractérisée en ce qu'**un palier moléculaire (9) ou un palier à billes ou encore un palier fixe est prévu dans au moins un logement de palier (5).

23. Jambe de force selon l'une quelconque des revendications précédentes 1 à 22, **caractérisée en ce que** l'insert métallique est constitué de flans soudés ou de bandes soudées, de préférence fabriqués en tôles d'épaisseurs différentes.
